(19)

Europäisches
Patentamt

European
Patent Office

Office européen
des brevets

(11)     **EP 3 822 048 B1**

(12)                    **EUROPEAN PATENT SPECIFICATION**

(45) Date of publication and mention
of the grant of the patent:
**01.05.2024  Bulletin 2024/18**

(21) Application number: **19833268.6**

(22) Date of filing: **11.03.2019**

(51) International Patent Classification (IPC):
***B25J 13/00*** *(2006.01)*

(52) Cooperative Patent Classification (CPC):
**B25J 9/1612**

(86) International application number:
**PCT/JP2019/009816**

(87) International publication number:
**WO 2020/012712 (16.01.2020 Gazette 2020/03)**

(54) **GRIPPING ATTITUDE EVALUATING DEVICE, AND GRIPPING ATTITUDE EVALUATING PROGRAM**

VORRICHTUNG ZUR AUSWERTUNG DER GRIFFHALTUNG UND PROGRAMM ZUR AUSWERTUNG DER GRIFFHALTUNG

DISPOSITIF D'ÉVALUATION D'ATTITUDE DE PRÉHENSION ET PROGRAMME D'ÉVALUATION D'ATTITUDE DE PRÉHENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **13.07.2018   JP 2018133730**

(43) Date of publication of application:
**19.05.2021  Bulletin 2021/20**

(73) Proprietor: **OMRON Corporation**
**Shiokoji-dori, Shimogyo-ku,**
**Kyoto-shi**
**Kyoto 600-8530 (JP)**

(72) Inventors:
• **KURATANI, Ryoichi**
**Kyoto 619-0283 (JP)**
• **NAKASHIMA, Akane**
**Kyoto 619-0283 (JP)**
• **HOSOMI, Shinichi**
**Kyoto 619-0283 (JP)**
• **SUZUMURA, Akihiro**
**Kyoto 619-0283 (JP)**

(74) Representative: **Horn Kleimann Waitzhofer**
**Schmid-Dreyer**
**Patent- und Rechtsanwälte PartG mbB**
**Theresienhöhe 12**
**80339 München (DE)**

(56) References cited:
**JP-A- S62 152 686      JP-A- 2007 331 075**
**JP-A- 2009 032 189      JP-A- 2012 006 097**
**JP-A- 2012 006 097      JP-A- 2014 210 310**
**JP-B1- 6 325 174**

**Description**

FIELD

This application claims priority to Japanese Patent Application No. 2018-133730 filed on July 13, 2018.
The present invention relates to a gripping posture evaluation apparatus and a gripping posture evaluation program.

BACKGROUND

In a teaching operation for a robot, an operator adjusts transport conditions including a gripping posture to prevent a workpiece from dropping from the robot gripping the workpiece with a robot hand. The gripping posture is typically determined based on gripping stability and determined by the operator through trial and error to prevent the workpiece from dropping.
Determining the gripping posture through trial and error may involve a skilled operator to obtain an optimal gripping posture. Obtaining the optimal gripping posture may not be possible or may take a lengthy time depending on the skill of the operator. A robot that picks workpieces stacked randomly may receive teaching of multiple optimal gripping postures for possible orientations of variously oriented workpieces.
A technique is awaited for automatically obtaining an appropriate gripping posture. In response to this, a controller may automatically determine, based on the three-dimensional (3D) shape of a workpiece (target) and the state of the content of the target, a transportation method for the target performed by a robot, and controlling the robot based on the determined transportation method (refer to, for example, Japanese Unexamined Patent Application Publication No. 2016-034685).
JP 6325174 B1 discloses a control device for controlling a picking device that picks up a workpiece at a first position and disposes the workpiece at a second position. The control device comprises: a first candidate information acquisition unit that acquires first candidate information indicating a plurality of postures that a picking hand of the picking device may adopt at the first position; and a second candidate information acquisition unit that acquires a second candidate information indicating a plurality of postures that the picking hand may adopt at the second position; and extracts one combination from among one or more combinations of the postures indicated by the first and second candidate informations. A trajectory calculating section calculates a trajectory for placing the workpiece in the posture related to the second position included in the extracted one combination at the second position. A judgement section judges whether or not there is interference on the trajectory calculated by the trajectory calculating section.

SUMMARY

TECHNICAL PROBLEM

The controller described in Japanese Unexamined Patent Application Publication No. 2016-034685 automatically determines a gripping posture for a target as a transportation method, but determines the gripping posture to prevent the content of the target from being diffused. Although the target may be transported stably, the robot may receive an excessive load and may not achieve an appropriate gripping posture under such a load. The robot transporting the target in a gripping posture under an excessive load may stop in emergence and cannot continue operating.
In response to the above issue, one or more aspects of the present invention are directed to a gripping posture evaluation apparatus and a gripping posture evaluation program for evaluating an appropriate gripping posture for a target based on a load on a robot.

SOLUTION TO PROBLEM

A gripping posture evaluation apparatus according to a first aspect of the present disclosure includes a gripping posture deriver that derives a gripping posture in which a robot hand included in a robot grips a workpiece, a load index calculator that calculates a load index value indicating a load to be applied to the robot gripping and transporting the workpiece with the robot hand in the gripping posture derived by the gripping posture deriver, and a gripping posture evaluator that evaluates the gripping posture by determining whether the gripping posture is appropriate based on the load index value calculated by the load index calculator. In response to the gripping posture evaluator determining that the gripping posture is inappropriate, derivation of a new gripping posture by the gripping posture deriver, calculation of a load index value by the load index calculator, and evaluation by the gripping posture evaluator are repeated.
The gripping posture evaluation apparatus according to the first aspect may further include a stability index calculator that calculates a stability index value indicating gripping stability for the workpiece to be gripped and transported by the robot hand in the gripping posture derived by the gripping posture deriver. The gripping posture evaluator may evaluate the gripping posture by determining whether the griping posture is appropriate based on the load index value calculated by the load index calculator and the stability index value calculated by the stability index calculator.

The gripping posture evaluation apparatus according to the first aspect may further include a movement trajectory generator that generates a movement trajectory to be used by the robot to transport the workpiece. The load index calculator may calculate the load index value for the robot to grip and transport the workpiece with the robot hand in accordance with the movement trajectory generated by the movement trajectory generator. The stability index calculator may calculate the stability index value for the robot to grip and transport the workpiece with the robot hand in accordance with the movement trajectory generated by the movement trajectory generator. In response to the gripping posture evaluator determining that the gripping posture is inappropriate, at least one of derivation of a new gripping posture by the gripping posture deriver or generation of a new movement trajectory by the movement trajectory generator, calculation of a load index value by the load index calculator, calculation of a stability index value by the stability index calculator, and evaluation by the gripping posture evaluator may be repeated.

In the gripping posture evaluation apparatus according to the first aspect, the load index calculator may determine whether the calculated load index value is appropriate. In response to the load index calculator determining that the load index value is inappropriate, the gripping posture deriver may derive a new gripping posture without the gripping posture evaluator evaluating the gripping posture for which the load index value is determined to be inappropriate.

In the gripping posture evaluation apparatus according to the first aspect, the stability index calculator may determine whether the calculated stability index value is appropriate. In response to the stability index calculator determining that the stability index value is inappropriate, the gripping posture deriver may derive a new gripping posture without the gripping posture evaluator evaluating the gripping posture for which the stability index value is determined to be inappropriate.

The gripping posture evaluation apparatus according to the first aspect may further include a gripping implementation evaluator that evaluates the gripping posture derived by the gripping posture deriver by determining whether the gripping posture is implementable by the robot picking or placing the workpiece. In response to the gripping implementation evaluator determining that the gripping posture of the robot is unimplementable, the gripping posture deriver may further derive a new gripping posture different from the gripping posture evaluated by the gripping implementation evaluator.

In the gripping posture evaluation apparatus according to the first aspect, the gripping posture deriver may derive a plurality of gripping postures. The gripping posture evaluator may determine whether the plurality of gripping postures derived by the gripping posture deriver are appropriate and determine, when determining that two or more of the plurality of gripping postures are appropriate, an optimal gripping posture by comparing the load index values calculated by the load index calculator for the two or more of gripping postures determined to be appropriate.

In the gripping posture evaluation apparatus according to the first aspect, the gripping posture deriver may derive a plurality of gripping postures. The gripping posture evaluator may determine whether the plurality of gripping postures derived by the gripping posture deriver are appropriate and determine, when determining that two or more of the plurality of gripping postures are appropriate, an optimal gripping posture by comparing the load index values calculated by the load index calculator for the two or more of gripping postures determined to be appropriate and by comparing the stability index values calculated by the stability index calculator for the two or more of gripping postures determined to be appropriate.

In the gripping posture evaluation apparatus according to the first aspect, the gripping posture deriver may derive a gripping posture by randomly determining a relative positional relationship between the robot hand and the workpiece.

In the gripping posture evaluation apparatus according to the first aspect, the gripping posture deriver may derive a gripping posture preferentially from a point at which an arm end position of the robot receiving the robot hand and a center of gravity of the workpiece match and move an arm end of the robot receiving the robot hand away from the center of gravity of the workpiece as a gripping posture is derived repeatedly.

A gripping posture evaluation program according to a second aspect of the present disclosure is a program for causing a computer to perform operations including deriving a gripping posture in which a robot hand included in a robot grips a workpiece, calculating a load index value indicating a load to be applied to the robot gripping and transporting the workpiece with the robot hand in the derived gripping posture, and evaluating the gripping posture by determining whether the gripping posture is appropriate based on the calculated load index value. In response to the gripping posture being determined to be inappropriate in the evaluating the gripping posture, derivation of a new gripping posture in the deriving the gripping posture, calculation of a load index value in the calculating the load index value, and evaluation in the evaluating the gripping posture are repeated.

In the gripping posture evaluation program according to the second aspect, the operations may further include calculating a stability index value indicating gripping stability for the workpiece to be gripped and transported by the robot hand in the derived gripping posture. The gripping posture may be evaluated by determining whether the gripping posture is appropriate in the evaluating the gripping posture based on the calculated load index value and the calculated stability index value.

In the gripping posture evaluation program according to the second aspect, the operations may further include generating a movement trajectory to be used by the robot to transport the workpiece. The load index value may be calculated in the calculating the load index value for the robot gripping and transporting the workpiece with the robot hand in accordance with the generated movement trajectory. The stability index value may be calculated in the calculating the stability index value for the robot gripping and transporting the workpiece with the robot hand in accordance with the generated movement trajectory. In response to the gripping posture being determined to be inappropriate in the evaluating the gripping posture, at least one of derivation of a new gripping posture in the deriving the gripping posture or generation of a new movement trajectory in the generating the movement trajectory, calculation of a load index value in the calculating the load index value, calculation of a stability index value in the calculating the stability index value, and evaluation in the evaluating the gripping posture may be repeated.

ADVANTAGEOUS EFFECTS

The technique according to the above aspects of the present disclosure allows evaluation of an appropriate gripping posture for a target based on a load on a robot.

BRIEF DESCRIPTION OF THE DRAWINGS

Fig. 1     is a schematic diagram of a robot and a gripping posture evaluation apparatus.
Fig. 2     is a view of the robot as a vertical articulated robot.
Fig. 3     is a block diagram of a gripping posture evaluation apparatus according to a first embodiment showing its hardware configuration.
Fig. 4     is a functional block diagram of an example of the gripping posture evaluation apparatus.
Fig. 5     is a view of an example robot hand and an example workpiece.
Fig. 6     is a diagram describing example gripping postures of the robot hand gripping the workpiece.
Fig. 7     is a table showing example stability index values and load index values for the illustrated gripping postures.
Fig. 8     is a flowchart showing a gripping posture evaluation process.
Fig. 9     is a flowchart showing a gripping posture evaluation process according to a second embodiment.
Fig. 10    is a functional block diagram of a gripping posture evaluation apparatus according to a third embodiment.
Fig. 11    is a flowchart showing a gripping posture evaluation process according to the third embodiment.

DETAILED DESCRIPTION

Embodiments of the present invention will now be described with reference to the drawings. The same or equivalent components and parts throughout the drawings are given the same reference numerals. The drawings may be exaggerated for ease of explanation, and may not be drawn to scale relative to the actual components.

First Embodiment

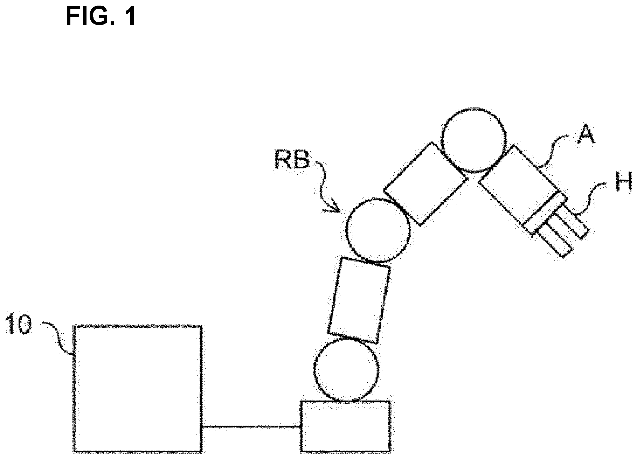

Fig. 1 is a schematic diagram of a robot RB and a gripping posture evaluation apparatus 10.

As shown in Fig. 1, the gripping posture evaluation apparatus 10 is connected to the robot RB to control the robot RB. The gripping posture evaluation apparatus 10 may be incorporated in a controller for controlling the robot RB.

The gripping posture evaluation apparatus 10 evaluates a posture in which the robot RB grips, for example, a workpiece, which is a transportation target. The structure of the gripping posture evaluation apparatus 10 will be described in detail later.

The robot RB includes, for example, a robot arm A with a robot hand H attached to its distal end as an end effector. The robot RB holds the workpiece with the robot hand H gripping the workpiece. The workpiece held is transported to a predetermined destination and then released to be placed in position. Thus, the robot RB is a pick-and-place machine that picks a workpiece at a predetermined site and places the workpiece at a destination.

The structure of the robot RB will be described first, and then the gripping posture evaluation apparatus 10 will be described in detail. Although a vertical articulated robot is used as an example of the robot RB in the present embodiment, the present embodiment may also use, for example, a horizontal articulated robot (selective compliance assembly robot arm, or SCARA, robot). The present embodiment may also use a device including a robot arm, such as a parallel link robot, a humanoid robot, or a mobile manipulator. The present embodiment may also use a mobile robot or a drone including a gripper such as a robot hand.

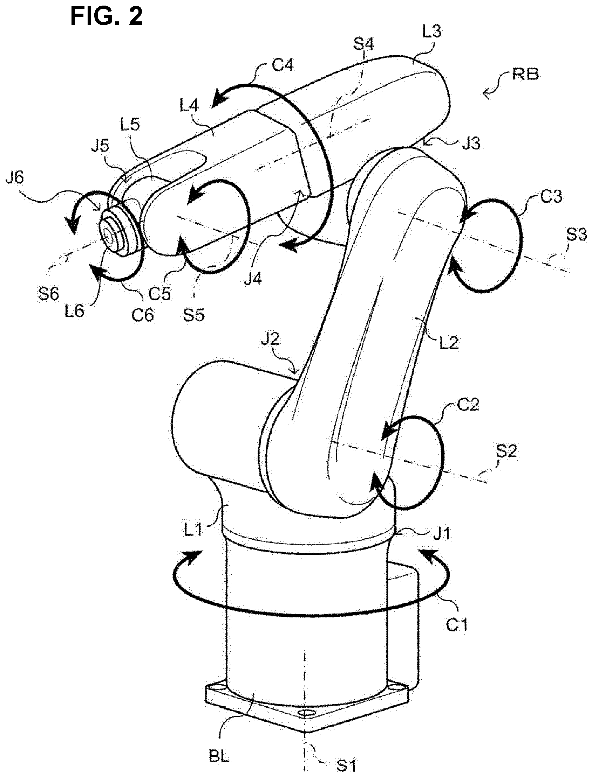

Fig. 2 is a view of the robot RB as a vertical articulated robot, showing its structure.

As shown in Fig. 2, the robot RB is a six-axis robot with six degrees of freedom. The robot RB includes a base link BL, links L1 to L6, and joints J1 to J6. Each joint connects links together. The joints J1 to J6 connect the links with a motor (not shown) in a rotatable manner. The links L1 to L6 and the robot hand H connected to the link L6 are herein collectively referred to as a robot arm.

The base link BL and the link L1 are connected to each other with the joint J1, which rotates in the direction indicated by arrow C1 about a vertical axis S1 in Fig. 2. In other words, the link L1 pivots in the direction indicated by arrow C1 on the joint J1.

The links L1 and L2 are connected to each other with the joint J2, which rotates in the direction indicated by arrow C2 about a horizontal axis S2 in Fig. 2. In other words, the link L2 pivots in the direction indicated by arrow C2 on the joint J2.

The links L2 and L3 are connected to each other with the joint J3, which rotates in the direction indicated by arrow C3 about an axis S3 in Fig. 2. In other words, the link L3 pivots in the direction indicated by arrow C3 on the joint J3.

The links L3 and L4 are connected to each other with the joint J4, which rotates in the direction indicated by arrow C4 about an axis S4 in Fig. 2. In other words, the link L4 pivots in the direction indicated by arrow C4 on the joint J4.

The links L4 and L5 are connected to each other with the joint J5, which rotates in the direction indicated by arrow C5 about an axis S5 in Fig. 2. In other words, the link L5 pivots in the direction indicated by arrow C5 on the joint J5.

The links L5 and L6 are connected to each other with the joint J6, which rotates in the direction indicated by arrow C6 about an axis S6 in Fig. 2. In other words, the link L6 pivots in the direction indicated by arrow C6 on the joint J6. The robot hand H attached to the link L6 is not shown in Fig. 2.

Each of the joints J1 to J6 has a predetermined rotational angle range as its movable range.

The posture of the robot RB is determined by the combination of the rotational angles of the joints J1 to J6. In other words, the operational command value for operating the robot RB is equivalent to the rotational angle of each of the joints J1 to J6 corresponding to a target posture for the robot RB. For example, the gripping posture in which the robot RB grips a workpiece is also obtained as rotational angle data for the joints J1 to J6.

The gripping posture evaluation apparatus 10 will now be described.

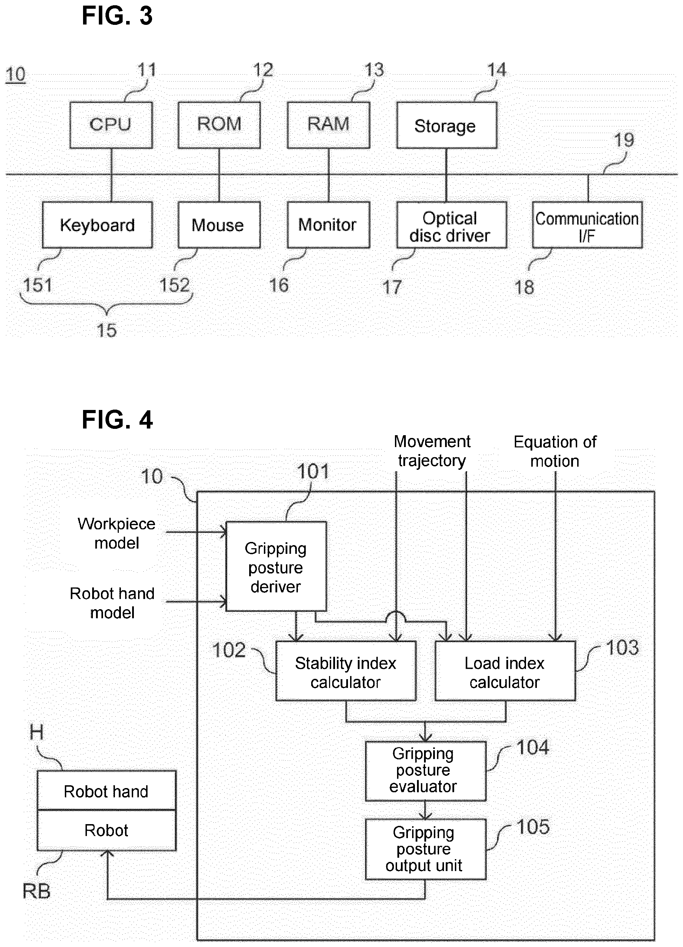

Fig. 3 is a block diagram of the gripping posture evaluation apparatus according to the first embodiment showing its hardware configuration.

The gripping posture evaluation apparatus 10 according to the present embodiment evaluates a gripping posture in which a robot arm grips a workpiece using models of the robot, the robot hand attached to the robot, and the workpiece, which is a target gripped by the robot hand. The models include, for example, a physical model presenting a physical phenomenon acting on, for example, the robot in a formula or a dynamic model obtained with, for example, system identification or machine learning from measurement data obtained by a real machine. The models include information such as the shape, mass, and center of gravity of each of the robot, the robot hand, and the workpiece.

As shown in Fig. 3, the gripping posture evaluation apparatus 10 includes a central processing unit (CPU) 11, a read-only memory (ROM) 12, a randomaccess memory (RAM) 13, a storage 14, an input unit 15, a monitor 16, an optical disc driver 17, and a communication interface 18. The components are connected to one another with a bus 19 in a communicable manner.

In the present embodiment, the ROM 12 or the storage 14 stores a gripping posture evaluation program for evaluating a gripping posture. The CPU 11 executes various programs and controls the components. More specifically, the CPU 11 reads a program from the ROM 12 or the storage 14 and executes the program using the RAM 13 as a work area. The CPU 11 controls the components and performs various arithmetic processes in accordance with the programs stored in the ROM 12 or the storage 14.

The ROM 12 stores programs and data. The RAM 13 serves as a work area for temporarily storing programs or data. The storage 14 includes a hard disk drive (HDD), a solid-state drive (SSD), or a flash memory and stores programs including an operating system and stores various items of data.

The input unit 15 includes a keyboard 151 and a pointing device such as a mouse 152, and is used for various input operations. The monitor 16 is, for example, a liquid crystal display, and displays various sets of information including whether a workpiece has been sucked and held successfully. The monitor 16 may include a touchscreen display that can also serve as the input unit 15. The optical disc driver 17 reads data stored in recording media, such as compact disc read-only memories (CD-ROMs) and Blu-ray discs, and writes data onto recording media.

The communication interface 18 communicates with other components and uses a standard such as Ethernet (registered trademark), Fiber Distributed Data Interface (FDDI), or Wi-Fi (registered trademark).

The functional components of the gripping posture evaluation apparatus 10 will now be described.

Fig. 4 is a functional block diagram of an example of the gripping posture evaluation apparatus 10.

The gripping posture evaluation apparatus 10 includes, as its functional components, a gripping posture deriver 101, a stability index calculator 102, a load index calculator 103, a gripping posture evaluator 104, and a gripping posture output unit 105 as shown in Fig. 4. Each functional component is implemented by the CPU 11 reading the gripping posture evaluation program stored in the ROM 12 or the storage 14, expanding the program into the RAM 13, and executing the program.

The gripping posture deriver 101 derives a gripping posture in which the robot hand H included in the robot RB grips a workpiece, which is a target. The gripping posture is determined based on the models of the workpiece and the robot hand H either randomly or in accordance with a predetermined rule. The determination of the gripping posture will be described in detail later.

The stability index calculator 102 calculates a stability index value indicating the gripping stability for a workpiece gripped and transported by the robot hand H in the gripping posture derived by the gripping posture deriver 101. The stability index calculator 102 calculates the stability index value using, as an input, the gripping posture derived by the gripping posture deriver 101 and a movement trajectory of the robot RB gripping and transporting the workpiece. The stability index value can be calculated based on, for example, the theory of force closure indicating stability particularly in handling in robotics. Force closure is an evaluation index of the balance between an external force and a workpiece. In some embodiments, the stability index value may be calculated based on the theory of form closure. Form closure is an evaluation index of the state in which a workpiece is immovable in any direction due to constraints on the workpiece, or in other words, a constrained state. Force closure and form closure are known theories and will not be described. In the present embodiment described below, force closure is used as the stability index value. When force closure is used as the stability index value, for example, the stability index value that is not force closure is 0, and the stability index value that is force closure is greater than 0 and equal to or less than 1 depending on the degree of stability.

More specifically, for example, a gripping force determined based on the specifications of the robot hand H and the mass of a workpiece W, as recommended by the manufacturer, is set as the gripping force of the robot RB, and the ideal value of stability is 1 when the gripping posture is randomly derived multiple times. The ideal value resulting from the derivation performed a larger number of times has higher reliability. However, the number of times is set as appropriate for the derivation possible in real time. A gripping posture may be derived preferentially from a point at which the arm end position of the robot RB receiving the robot hand H and the center of gravity of the workpiece W match, rather than being derived randomly. In some embodiments, when the workpiece W is fragile and can break under a gripping force recommended by the manufacturer, the user operates the robot hand H to grip the workpiece W in any posture and determine the maximum gripping force that the workpiece W can receive without breaking, sets the determined gripping force as the gripping force of the robot hand H, and then determines the ideal value of the stability to be 1 for the gripping posture resulting from the derivation performed randomly multiple times.

The load index calculator 103 calculates a load index value indicating a load applied to the robot RB when the robot hand H grips and transports the workpiece W in the gripping posture derived by the gripping posture deriver 101. The load applied to the robot RB is obtained as torque applied to the motor that rotates the joints J1 to J6 in the robot RB. The load index calculator 103 calculates the load index value using, as an input, the movement trajectory of the robot RB gripping and transporting the workpiece W and an equation of motion acting on the robot RB transporting the workpiece W. The load index value is, for example, a numerical value inversely proportional to the amount of load applied to the robot RB and is calculated as a numerical value of 0 to 1. Thus, the calculated load index value is smaller for a larger load applied to the robot RB. The load index value may be calculated using the formula (1) below.
Formula 1

$$M(q)\ddot{q} + c(q,\dot{q}) + g(q) = \tau - \tau^{fric} - \tau^{um} \qquad \text{Formula (1)}$$

In this formula, q indicates an angle, $\dot{q}$ an angle velocity, and $\ddot{q}$ an angular acceleration at each joint of the robot RB, M indicates an inertia matrix, c the Coriolis force, g a gravity term, $\tau^{fric}$ a nonlinear friction coefficient, and $\tau^{um}$ an unmodeled modeling error.

The gripping posture evaluator 104 evaluates the appropriateness of the gripping posture based on at least the load index value calculated by the load index calculator 103. In the present embodiment, the gripping posture evaluator 104 evaluates the appropriateness of the gripping posture based on the stability index value calculated by the stability index calculator 102 and the load index value calculated by the load index calculator 103.

The gripping posture output unit 105 outputs a control signal to operate the robot RB and the robot hand H in the gripping posture determined appropriate by the gripping posture evaluator 104.

An example gripping posture in which the robot hand H grips the workpiece W derived by the gripping posture deriver 101 will now be described.

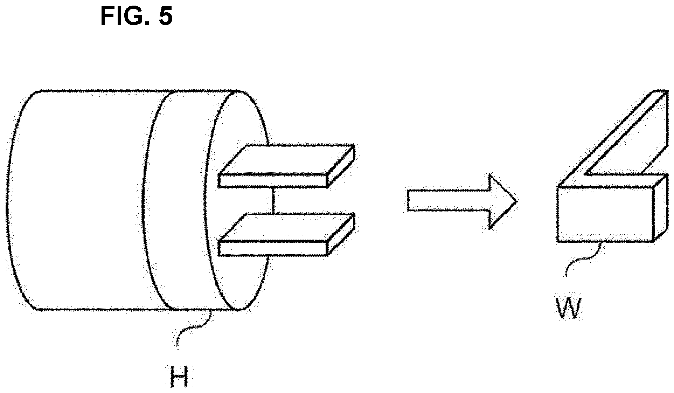

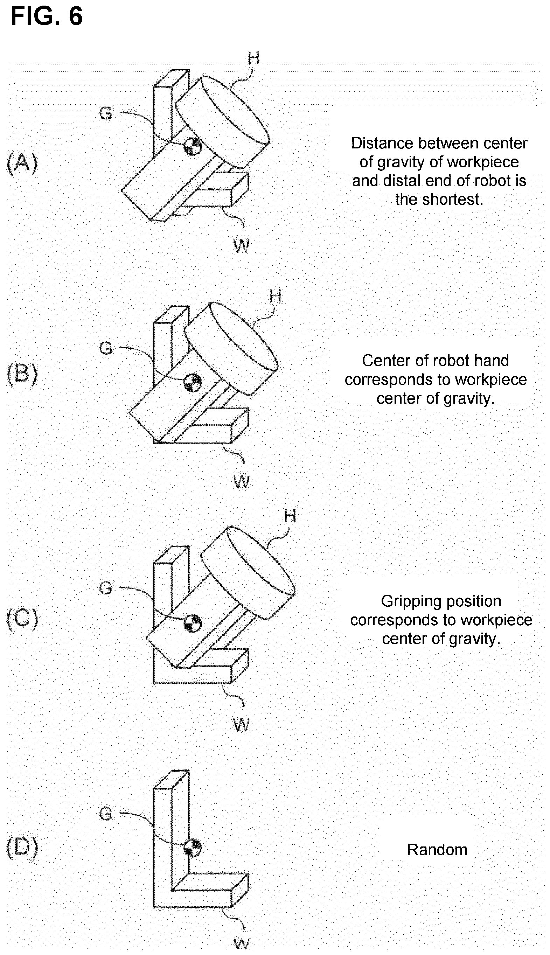

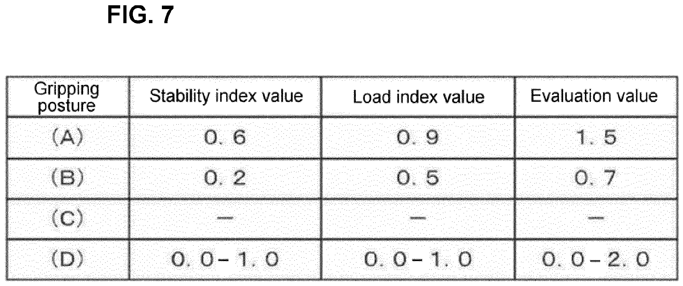

Fig. 5 is a view of an example of the robot hand H and an example of the workpiece W. Fig. 6 is a diagram describing example gripping postures of the robot hand H gripping the workpiece W. Fig. 7 is a table showing example stability index values and load index values for the illustrated gripping postures.

In the present embodiment, the robot hand H grips, for example, the L-shaped workpiece W as shown in Fig. 5. A gripping posture in which the robot hand H grips the workpiece W is derived basically in the manner shown in, for example, Fig. 6. In Fig. 6, circles in black and white each indicate the center of gravity G of the workpiece W.

Fig. 6 shows four example gripping postures A to D. In the gripping posture A, the distance between the center of gravity G of the workpiece W and the arm end (distal end of the link L6) of the robot RB is the shortest. The stability index value and the load index value are likely to be higher in the gripping posture A than in other gripping postures. For the gripping posture A, the gripping posture deriver 101 first derives the gripping posture A, and then can derive various gripping postures by changing the relative angle about the center of gravity G between the workpiece W and the robot hand H and moving the workpiece W away from the center of gravity G for deriving another gripping posture. More specifically, for the gripping posture A, the gripping posture deriver 101 derives the gripping posture to move the arm end of the robot RB more away from the center of gravity G of the workpiece W as the gripping posture is derived repeatedly.

In the gripping posture B, the center (center of gravity) of the robot hand H corresponds to the center of gravity G of the workpiece W. The stability index value and the load index value tend to be lower in the gripping posture B than in the gripping posture A. For the gripping posture B, the gripping posture deriver 101 first derives the gripping posture B, and then can derive various gripping postures by changing the relative angle about the center of gravity G between the workpiece W and the robot hand H and moving the workpiece W away from the center of gravity G for deriving another gripping posture. More specifically, for the gripping posture B, the gripping posture deriver 101 derives the gripping posture to move the center of the robot hand H more away from the center of gravity G of the workpiece W as the gripping posture is derived repeatedly.

In the gripping posture C, the gripping position of the robot hand H corresponds to the center of gravity G of the workpiece W. The gripping posture C is highly stable but may not allow gripping of a workpiece W having a certain shape. Further, the gripping posture C may have a lower load index value. For the gripping posture C, the gripping posture deriver 101 first derives the gripping posture C, and then can derive various gripping postures by changing the relative angle about the center of gravity G between the workpiece W and the robot hand H and moving the gripping position away from the center of gravity G of the workpiece W for deriving another gripping posture.

In this manner, for any of the gripping postures A to C, the gripping posture is shifted gradually from each of the gripping postures A to C as a starting point to obtain various gripping postures. In some embodiments, all the gripping postures A to C may be used. In this case, for example, the gripping postures A to C are used in this order to calculate gripping postures.

A gripping posture may be randomly determined as with, for example, the gripping posture D, other than the gripping postures A to C. In this case, a derived gripping posture is irregular, and thus the stability index value and the load index value are unstable. However, a gripping posture may be derived irregularly and randomly in the random gripping posture D. This may provide an optimal gripping posture.

As described above, a gripping posture may be derived based on various methods. However, a gripping posture may be derived based on any method other than the above methods.

When a gripping posture is determined based on the gripping postures A to D, the stability index values and the load index values are, for example, index values in a table shown in Fig. 7. In Fig. 7, the stability index value is 0.6 and the load index value is 0.9 in the gripping posture A. The gripping posture evaluator 104 calculates an evaluation value to be 1.5, which is the total of the stability index value and the load index value. In the gripping posture B, the stability index value is 0.2 and the load index value is 0.5. The gripping posture evaluator 104 calculates an evaluation value to be 0.7, which is the total of the stability index value and the load index value. In the gripping posture C, the robot hand H cannot grip the workpiece W with the shape in the above example. Thus, the stability index value and the load index value cannot be calculated, and also the evaluation value cannot be obtained. In the random gripping posture D, a gripping posture cannot be determined uniquely, and thus the stability index value and the load index value may be 0.0 to 1.0, and the evaluation value is to be 0.0 to 2.0.

In this manner, the gripping posture evaluator 104 calculates the evaluation value based on the stability index value and the load index value. The gripping posture evaluator 104 may calculate the evaluation value by weighting the stability index value and the load index value.

The operation of the gripping posture evaluation apparatus 10 will now be described.

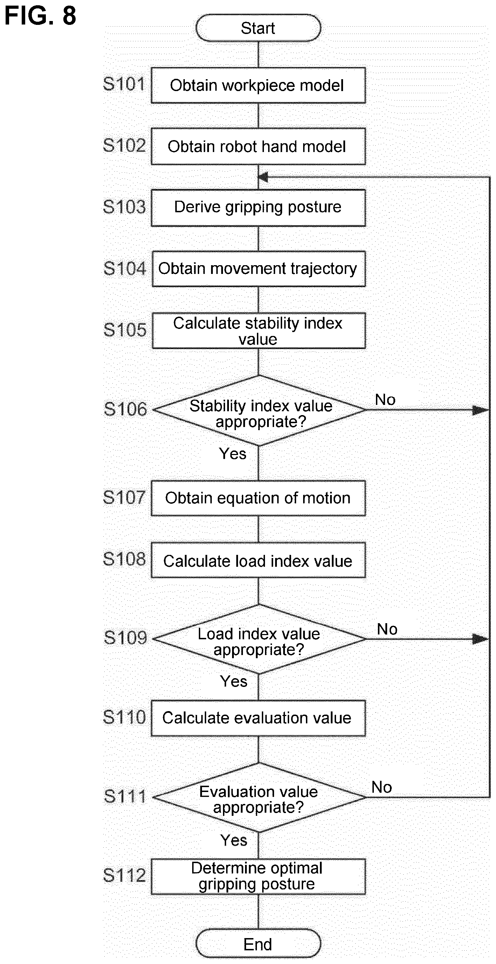

Fig. 8 is a flowchart showing a gripping posture evaluation process. The CPU 11 reads a gripping posture evaluation program from the ROM 12 or the storage 14, expands the program in the RAM 13, and executes the program to perform the gripping posture evaluation process.

The CPU 11 first obtains a model of the workpiece W (step S101), and further obtains a model of the robot hand H (step S102). More specifically, the CPU 11 obtains information about the shape, mass, and center of gravity of each of the workpiece W and the robot hand H as the models of the workpiece W and the robot hand H.

The CPU 11, which functions as the gripping posture deriver 101, derives a gripping posture (step S103). The gripping posture is derived in the manner described above. For example, the CPU 11 derives the gripping posture A shown in Fig. 6. The CPU 11 then obtains a movement trajectory of the robot RB for transporting the workpiece W (step S104). The movement trajectory is followed by the robot RB in operation. The movement trajectory is represented as a timeseries set of data for, for example, the angle, angle velocity, and angular acceleration of each of the joints J1 to J6 of the robot RB.

The CPU 11, which functions as the stability index calculator 102, calculates a stability index value based on the gripping posture derived in step S103 and the movement trajectory obtained in step S104 (step S105). The CPU 11 determines whether the calculated stability index value is appropriate (step S106). The CPU 11 determines whether the stability index value is appropriate by comparing the index value with a predetermined threshold. For example, when the stability index value is calculated within a value range of 0.0 to 1.0, the threshold is set as a numerical value that falls within the range. The threshold is set as, for example, 0.3. In this case, when the stability index value calculated in step S105 is equal to or greater than 0.3, the stability index value is determined appropriate in step S106. The threshold is determined as appropriate in accordance with stability intended by an operator.

When the stability index value is inappropriate (No in step S106), the CPU 11 returns to step S103 and derives another gripping posture. The other gripping posture is derived by, for example, changing the relative angle about the center of gravity G of the workpiece W between the workpiece W and the robot hand H and moving the workpiece W away from the center of gravity G.

When the stability index value is appropriate (Yes in step S106), the CPU 11 obtains an equation of motion to be applied to the robot RB transporting the workpiece W (step S107).

The CPU 11, which functions as the load index calculator 103, calculates a load index value based on the gripping posture derived in step S103, the movement trajectory obtained in step S104, and the equation of motion obtained in step S107 (step S108). The CPU 11 determines whether the calculated load index value is appropriate (step S109). The CPU 11 determines whether the load index value is appropriate by comparing the index value with a predetermined threshold. For example, when the load index value is calculated within a value range of 0.0 to 1.0, the threshold is set as a numerical value that falls within the range. The threshold is set as, for example, 0.3. In this case, when the load index value calculated in step S108 is equal to or greater than 0.3, the load index value is determined appropriate in step S109. The threshold is determined as appropriate in accordance with a load allowable by the operator.

When the load index value is inappropriate (No in step S109), the CPU 11 returns to step S103 and derives another gripping posture.

When the load index value is appropriate (Yes in step S109), the CPU 11, which functions as the gripping posture evaluator 104, calculates an evaluation value (step S110). The evaluation value is, for example, the total of the stability index value calculated in step S105 and the load index value calculated in step S108.

The CPU 11 determines whether the evaluation value is appropriate (step S111). The CPU 11 determines whether the evaluation value is appropriate by comparing the value with a predetermined threshold. For example, when the evaluation value is calculated within a value range of 0.0 to 2.0, the threshold is set as a numerical value that falls within the range. The threshold is set as, for example, 1.2. In this case, when the evaluation value calculated in step S110 is equal to or greater than 1.2, the evaluation value is determined appropriate in step S111. The threshold is determined by the operator as appropriate.

When the evaluation value is inappropriate (No in step S111), the CPU 11 returns to step S103 and derives another gripping posture.

When the evaluation value is appropriate (Yes in step S111), the CPU 11 determines that the gripping posture with the evaluation value determined appropriate in step S111 is an optimal gripping posture and stores the posture into the storage 14 (step S112). The CPU 11 then ends the gripping posture evaluation process. As subsequent processing, the CPU 11, which functions as the gripping posture output unit 105, controls the robot RB in accordance with the optimal gripping posture stored in the storage 14 and uses the gripping posture to transport the workpiece W.

As described above, the gripping posture evaluation apparatus 10 according to the first embodiment determines whether a gripping posture is appropriate based on the load index value calculated by the load index calculator 103. This structure enables an appropriate gripping posture for a workpiece W to be evaluated based on a load applied to the robot RB.

The gripping posture evaluation apparatus 10 also uses the stability index value calculated by the stability index calculator 102. Thus, the gripping posture evaluation apparatus 10 can evaluate an appropriate gripping posture for the workpiece W based on transportation stability of the workpiece W in addition to a load applied to the robot RB.

The gripping posture evaluation apparatus 10 also determines whether the stability index value alone is appropriate, and derives another gripping posture when the stability index value does not satisfy the predetermined threshold. Thus, for an unstable gripping posture, another gripping posture can be searched for without calculating the evaluation value. This structure enables an appropriate gripping posture to be retrieved earlier.

The gripping posture evaluation apparatus 10 also determines whether the load index value alone is appropriate, and derives another gripping posture when the load index value does not satisfy the predetermined threshold. Thus, for a gripping posture with a large load, another gripping posture can be searched for without calculating the evaluation value. This structure enables an appropriate gripping posture to be retrieved earlier.

For deriving a gripping posture, the gripping posture evaluation apparatus 10 first derives a gripping posture in which the arm end position of the robot RB is closest to the center of gravity G of the workpiece W. When the gripping posture is inappropriate, the gripping posture evaluation apparatus 10 derives another gripping posture by gradually changing the relative positional relationship between the robot hand H and the workpiece W. As the arm end position of the robot RB is closer to the center of gravity G of the workpiece W, the stability index value and the load index value are likely to be larger, enabling an appropriate gripping posture to be retrieved earlier than when a gripping posture is derived completely randomly.

However, the gripping posture evaluation apparatus 10 may derive a gripping posture completely randomly. In this case, a gripping posture may not be a posture in which the arm end position of the robot RB is close to the center of gravity G of the workpiece W and may be derived randomly, and thus a gripping posture with a larger evaluation value may be retrieved.

The gripping posture evaluation apparatus 10 according to the first embodiment has been described above. However, the present invention is not limited to the first embodiment and may be modified or changed variously.

For example, the evaluation value is calculated based on both of the stability index value and the load index value in the first embodiment. However, steps S105, S106, S110, and S111 may be eliminated, and the load index value may be determined as the evaluation value.

Other modifications will be described below.

Second Embodiment

In the first embodiment, once a single gripping posture with an appropriate evaluation value is retrieved in step S111 in Fig. 8, the CPU 11 determines that the gripping posture is optimal and advances to step S112. In a second embodiment, multiple gripping postures with appropriate evaluation values are obtained to determine an optimal gripping posture among the gripping postures.

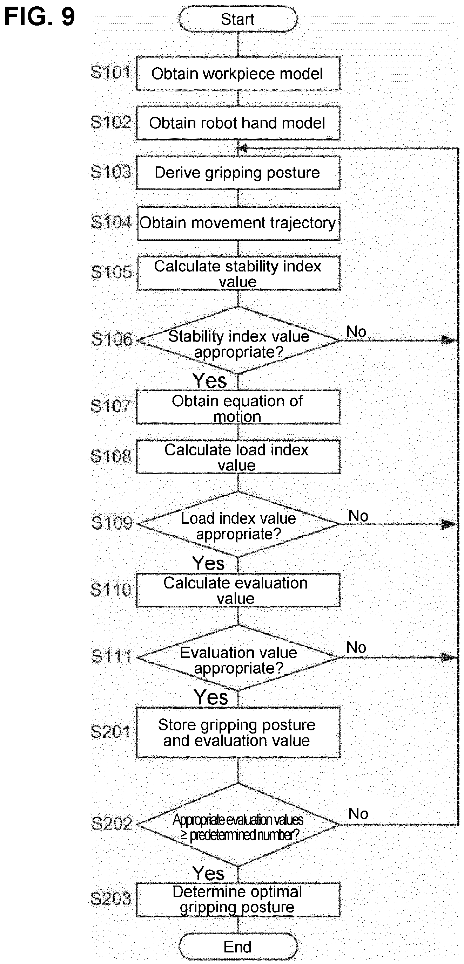

Fig. 9 is a flowchart showing a gripping posture evaluation process according to the second embodiment. Many steps in the gripping posture evaluation process shown in Fig. 9 are the same as in the gripping posture evaluation process according to the first embodiment. Thus, the steps in Fig. 9 that are the same as in Fig. 8 are given the same step numerals and will not be described. More specifically, steps S101 to S111 in Fig. 9 are the same as steps S101 to S111 in Fig. 8.

When the evaluation value is appropriate (Yes in Step S111), the CPU 11 stores, into the storage 14, the evaluation value determined appropriate and the gripping posture with the evaluation value in a manner associated with each other (step S201).

The CPU 11 determines whether the number of evaluation values determined appropriate and stored in the storage 14 is equal to or greater than a predetermined number (step S202). The predetermined number may be any number. The predetermined number is, for example, 10.

When the number of evaluation values stored in the storage 14 is less than the predetermined number (No in step S202), the CPU 11 returns to step S103 and derives another gripping posture.

When the number of evaluation values stored in the storage 14 is equal to or greater than the predetermined number (Yes in step S202), the CPU 11 determines a gripping posture associated with the highest value of evaluation values stored in the storage 14 as an optimal gripping posture (step S203).

As described above, the gripping posture deriver 101 in the gripping posture evaluation apparatus 10 according to the second embodiment derives multiple gripping postures. The gripping posture evaluator 104 determines whether the evaluation value of each gripping posture obtained by the gripping posture deriver 101 is appropriate. When determining that two or more of the multiple gripping postures are appropriate, the gripping posture evaluator 104 compares the evaluation values calculated for the multiple gripping postures determined appropriate to determine an optimal gripping posture. Thus, more optimal gripping posture may be determined in the gripping posture evaluation process than in the process shown in Fig. 8.

In step S202 in Fig. 9, the CPU 11 may determine whether the number of gripping postures derived in step S103 is equal to or greater than a predetermined number, instead of the number of gripping postures with appropriate evaluation values. In this case, the predetermined number is set to be, for example, 50 to 10000. In this manner, the number of gripping postures to be derived is counted, and the predetermined number is set to be large, allowing the evaluation values of multiple gripping postures derived comprehensively to be calculated for determining an optimal gripping posture. The number of gripping postures to be derived has an upper limit, thus preventing the calculation time from becoming too lengthy.

In the second embodiment, the evaluation value is calculated based on both of the stability index value and the load index value. However, steps S105, S106, S110, and S111 may be eliminated, and the load index value may be determined as the evaluation value.

Third Embodiment

A gripping posture evaluation apparatus 10 according to a third embodiment further includes components additional to the gripping posture evaluation apparatus 10 according to the first embodiment.

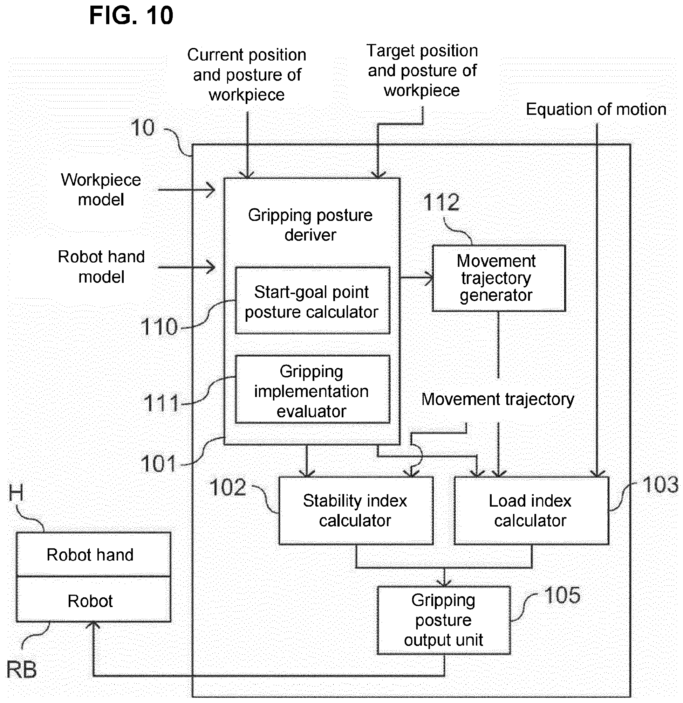

Fig. 10 is a functional block diagram of the gripping posture evaluation apparatus 10 according to the third embodiment.

As shown in Fig. 10, the gripping posture evaluation apparatus 10 according to the third embodiment additionally includes a start-goal point posture calculator 110, a gripping implementation evaluator 111, and a movement trajectory generator 112. Each functional component is implemented by the CPU 11 reading the gripping posture evaluation program stored in the ROM 12 or the storage 14, expanding the program into the RAM 13, and executing the program.

The start-goal point posture calculator 110 and the gripping implementation evaluator 111 assist the gripping posture deriver 101. More specifically, the start-goal point posture calculator 110 calculates at least one of postures in which the robot RB picks the workpiece W or in which the robot RB places the workpiece W. For example, the gripping posture deriver 101 obtains the current (initial) position and the posture of the workpiece W based on image information obtained by a three-dimensional (3D) camera or an infrared camera (not shown). The start-goal point posture calculator 110 applies, to the obtained current position and posture of the workpiece W, the gripping posture derived by the gripping posture deriver 101 based on the models of the robot hand H and the workpiece W. In other words, the start-goal point posture calculator 110 calculates the workpiece W at the current position in the current posture as the start point posture of the robot RB gripping the workpiece W in the derived gripping posture.

The start-goal point posture calculator 110 also obtains, with the 3D camera or the infrared camera (not shown), image information about a target position to which the workpiece W is transported. The start-goal point posture calculator 110 determines a target position and posture of the workpiece W transported to and placed on the target position based on the obtained image information about the target position. The start-goal point posture calculator 110 applies, to the position and the posture of the workpiece W at the target position, the gripping posture derived by the gripping posture deriver 101 based on the models of the robot hand H and the workpiece W. In other words, the start-goal point posture calculator 110 calculates the workpiece W at the target position in the target posture as the goal point posture of the robot RB gripping the workpiece W in the derived gripping posture.

The start-goal point posture calculator 110 may obtain the current position and posture of the workpiece W and the target position and posture of the workpiece W as predetermined values preregistered by the operator.

The gripping implementation evaluator 111 evaluates whether the start point posture and the goal point posture of the robot RB calculated by the start-goal point posture calculator 110 are implementable by the robot RB.

The movement trajectory generator 112 generates a movement trajectory of the robot RB transporting the workpiece W. The movement trajectory is, for example, a trajectory that connects the current position and posture of the workpiece W to the target position and posture of the workpiece W that are the predetermined values preregistered by the operator. In some embodiments, the movement trajectory is a trajectory that connects the current position and posture of the workpiece W to the target position and posture of the workpiece W that are calculated by the start-goal point posture calculator 110. The movement trajectory generator 112 generates a trajectory with, for example, a random sampling method, such as a rapidly-exploring random tree (RRT) or a probabilistic roadmap (PRM), or an optimization method, such as covariant hamiltonian optimization for motion planning (CHOMP) or stochastic trajectory optimization for motion planning (STOMP). With such methods, a path from a start point to a goal point can be retrieved speedily to generate a movement trajectory. The movement trajectory may be changed randomly at every generation.

The operation of the gripping posture evaluation apparatus 10 according to the third embodiment will now be described.

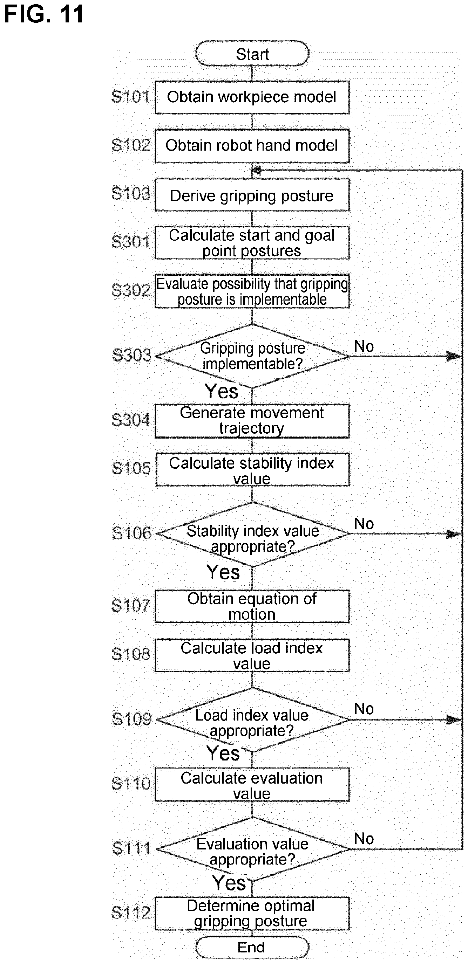

Fig. 11 is a flowchart showing a gripping posture evaluation process according to the third embodiment. Some steps in the gripping posture evaluation process according to the third embodiment are the same as in the process shown in Fig. 8. The steps in Fig. 11 that are the same as in Fig. 8 are given the same step numerals and will not be described.

The CPU 11, which functions as the start-goal point posture calculator 110, calculates the postures of the robot RB at a start point and a goal point after deriving the gripping posture in step S103 (step S301). The CPU 11 calculates the postures of the robot RB at the start point and the goal point by applying the gripping posture derived in step S103 to the current position and posture of the workpiece W and to the target position and posture of the workpiece W.

The CPU 11, which functions as the gripping implementation evaluator 111, then evaluates the possibility that the calculated gripping posture is implementable (step S302). More specifically, the CPU 11 determines whether the postures of the robot RB at the start point and the goal point calculated in step S301 are actually implementable by the movement of the robot RB. When at least one of the postures at the start point or the goal point exceeds the movable range of the robot RB, the gripping posture derived in step S103 is unimplementable. Also, when, for example, an obstacle is located near the workpiece W and the robot RB comes in contact with the obstacle in the derived gripping posture, the gripping posture derived in step S103 is unimplementable.

The CPU 11 determines whether the gripping posture is implementable (step S303). When the gripping posture is unimplementable (No in step S303), the CPU 11 returns to step S103. When returning to step S103, the CPU 11 generates a new movement trajectory in step S304. Thus, the gripping posture derived in step S103 and the movement trajectory generated in step S304 are combined randomly, and an optimal combination of the gripping posture and the movement trajectory is also searched for.

When the gripping posture is implementable (Yes in step S303), the CPU 11 generates a movement trajectory in which the robot RB operates from the start point to the goal point calculated in step S301 (step S304). The CPU 11 calculates a stability index value and a load index value obtained when the robot RB operates in accordance with the generated movement trajectory (steps S105 and S108).

As described above, the CPU 11 determines whether the calculated gripping posture corresponds to the actual position and posture of the workpiece W and to the target position and posture of the workpiece W in the third embodiment. When the gripping posture cannot correspond to the positions and postures, a new gripping posture is derived promptly, thus reducing attempts associated with an unimplementable gripping posture for the workpiece W. Thus, the gripping posture can be optimized effectively.

In response to return to step S103, derivation of a gripping posture in step S103 and generation of a movement trajectory in step S304 are repeated. Thus, a gripping posture in which the robot RB receives a small load may be obtained with a higher probability than when derivation of a gripping posture and generation of a movement trajectory are performed once. Steps S201 and S202 in Fig. 9 may be added to the flowchart in Fig. 11. In this case, derivation of a gripping posture and generation of a movement trajectory are repeated reliably.

In the third embodiment, a movement trajectory of the robot RB is generated with a specific method. However, a movement trajectory in which the robot RB receives an optimal load may be stored in a database such as the storage 14, and a new movement trajectory may be generated based on a past optimal movement trajectory. The movement trajectory used in the past is referred to, thus generating a movement trajectory reflecting, for example, the operator's preference.

In the third embodiment, as shown in Fig. 11, when the stability index value is inappropriate in step S106, the processing returns to step S103. For a gripping posture being implementable, derivation of a gripping posture in step S103 and generation of a movement trajectory in step S304 are repeated. However, both derivation of a gripping posture and generation of a movement trajectory may not be repeated. For example, at least derivation of a gripping posture or generation of a movement trajectory may be repeated based on, for example, the type, size, or mass of the workpiece W or an instruction from the user. Generating a movement trajectory can also change a load and stability, in addition to deriving a gripping posture. Thus, repeating generation of the movement trajectory may also be effective.

The workpiece W is gripped with the robot hand H attached to the robot RB in the first to third embodiments. However, the present invention is not limited to the structure in which the workpiece W is gripped, and is also applicable to the structure in which the workpiece W is sucked and held with, for example, a suction pad, instead of the robot hand H.

Although the CPU reads software (program) to perform the gripping posture evaluation process in the above embodiments, the process may be performed by processors other than the CPU. Such processors include fieldprogrammable gate arrays (FPGAs) and other programmable logic devices (PLDs) that are reconfigurable after being manufactured, and dedicated electric circuits with circuit configurations specially designed to perform specific processing, such as application-specific integrated circuits (ASICs). The gripping posture evaluation process may be performed by one of such processors or a combination of two or more processors of the same type or different types (for example, a plurality of FPGAs or combination of a CPU and an FPGA). More specifically, the processors include, as their hardware components, electric circuits combining circuit elements such as semiconductor devices.

Although the gripping posture evaluation program is prestored (preinstalled) in the storage 14 or the ROM 12 in the above embodiments, the storage device is not limited to such examples. The program may be stored in a non-transitory recording medium such as a compact disc read-only memory (CD-ROM), a digital versatile disc read-only memory (DVD-ROM), or a universal serial bus (USB) memory device. The program may be downloaded from an external device through a network.

## Claims

1. A gripping posture evaluation apparatus (10), comprising:

   a gripping posture deriver (101) configured to derive a gripping posture in which a robot hand (H) included in a robot (RB) grips a workpiece (W);
   a load index calculator (103) configured to calculate a load index value indicating a load to be applied to the robot (RB) gripping and transporting the workpiece (W) with the robot hand (H) in the gripping posture derived by the gripping posture deriver (101); and

a gripping posture evaluator (104) configured to evaluate the gripping posture by determining whether the gripping posture is appropriate based on the load index value calculated by the load index calculator (103), wherein in response to the gripping posture evaluator (104) determining that the gripping posture is inappropriate, derivation of a new gripping posture by the gripping posture deriver (101), calculation of a load index value by the load index calculator (103), and evaluation by the gripping posture evaluator (104) are repeated.

2.   The gripping posture evaluation apparatus (10) according to claim 1, further comprising:

a stability index calculator (102) configured to calculate a stability index value indicating gripping stability for the workpiece (W) to be gripped and transported by the robot hand (H) in the gripping posture derived by the gripping posture deriver (101),
wherein the gripping posture evaluator (104) evaluates the gripping posture by determining whether the gripping posture is appropriate based on the load index value calculated by the load index calculator (103) and the stability index value calculated by the stability index calculator (102).

3.   The gripping posture evaluation apparatus (10) according to claim 2, further comprising:

a movement trajectory generator (112) configured to generate a movement trajectory to be used by the robot (RB) to transport the workpiece (W),
wherein the load index calculator (103) calculates the load index value for the robot (RB) to grip and transport the workpiece (W) with the robot hand (H) in accordance with the movement trajectory generated by the movement trajectory generator (112),
the stability index calculator (102) calculates the stability index value for the robot (RB) to grip and transport the workpiece (W) with the robot hand (H) in accordance with the movement trajectory generated by the movement trajectory generator (112), and
in response to the gripping posture evaluator (104) determining that the gripping posture is inappropriate, at least one of derivation of a new gripping posture by the gripping posture deriver (101) or generation of a new movement trajectory by the movement trajectory generator (112), calculation of a load index value by the load index calculator (103), calculation of a stability index value by the stability index calculator (102), and evaluation by the gripping posture evaluator (104) are repeated.

4.   The gripping posture evaluation apparatus (10) according to any one of claims 1 to 3, wherein

the load index calculator (103) determines whether the calculated load index value is appropriate, and
in response to the load index calculator (103) determining that the load index value is inappropriate, the gripping posture deriver (101) derives a new gripping posture without the gripping posture evaluator (104) evaluating the gripping posture for which the load index value is determined to be inappropriate.

5.   The gripping posture evaluation apparatus (10) according to claim 2 or claim 3, wherein

the stability index calculator (102) determines whether the calculated stability index value is appropriate, and
in response to the stability index calculator (102) determining that the stability index value is inappropriate, the gripping posture deriver (101) derives a new gripping posture without the gripping posture evaluator (104) evaluating the gripping posture for which the stability index value is determined to be inappropriate.

6.   The gripping posture evaluation apparatus (10) according to any one of claims 1 to 5, further comprising:

a gripping implementation evaluator (111) configured to evaluate the gripping posture derived by the gripping posture deriver (101) by determining whether the gripping posture is implementable by the robot (RB) picking or placing the workpiece (W),
wherein in response to the gripping implementation evaluator (111) determining that the gripping posture of the robot (RB) is unimplementable, the gripping posture deriver (101) further derives a new gripping posture different from the gripping posture evaluated by the gripping implementation evaluator (111).

7.   The gripping posture evaluation apparatus (10) according to any one of claims 1 to 6, wherein

the gripping posture deriver (101) derives a plurality of gripping postures, and
the gripping posture evaluator (104) determines whether the plurality of gripping postures derived by the gripping posture deriver (101) are appropriate and determines, when determining that two or more of the plurality of gripping postures are appropriate, an optimal gripping posture by comparing the load index values calculated by the load index calculator (103) for the two or more of gripping postures determined to be appropriate.

8. The gripping posture evaluation apparatus (10) according to claim 2, claim 3, or claim 5, wherein

the gripping posture deriver (101) derives a plurality of gripping postures, and
the gripping posture evaluator (104) determines whether the plurality of gripping postures derived by the gripping posture deriver (101) are appropriate and determines, when determining that two or more of the plurality of gripping postures are appropriate, an optimal gripping posture by comparing the load index values calculated by the load index calculator (103) for the two or more of gripping postures determined to be appropriate and by comparing the stability index values calculated by the stability index calculator (102) for the two or more of gripping postures determined to be appropriate.

9. The gripping posture evaluation apparatus (10) according to any one of claims 1 to 8, wherein
the gripping posture deriver (101) derives a gripping posture by randomly determining a relative positional relationship between the robot hand (H) and the workpiece (W).

10. The gripping posture evaluation apparatus (10) according to any one of claims 1 to 8, wherein
the gripping posture deriver (101) derives a gripping posture preferentially from a point at which an arm end position of the robot (RB) receiving the robot hand (H) and a center of gravity of the workpiece (W) match and moves an arm end of the robot (RB) receiving the robot hand (H) away from the center of gravity of the workpiece (W) as a gripping posture is derived repeatedly.

11. A gripping posture evaluation program for causing a computer to perform operations comprising:

deriving a gripping posture in which a robot hand (H) included in a robot (RB) grips a workpiece (W);
calculating a load index value indicating a load to be applied to the robot (RB) gripping and transporting the workpiece (W) with the robot hand (H) in the derived gripping posture; and
evaluating the gripping posture by determining whether the gripping posture is appropriate based on the calculated load index value,
wherein in response to the gripping posture being determined to be inappropriate in the evaluating the gripping posture, derivation of a new gripping posture in the deriving the gripping posture, calculation of a load index value in the calculating the load index value, and evaluation in the evaluating the gripping posture are repeated.

12. The gripping posture evaluation program according to claim 11, wherein

the operations further comprise calculating a stability index value indicating gripping stability for the workpiece (W) to be gripped and transported by the robot hand (H) in the derived gripping posture, and
the gripping posture is evaluated by determining whether the gripping posture is appropriate in the evaluating the gripping posture based on the calculated load index value and the calculated stability index value.

13. The gripping posture evaluation program according to claim 12, wherein

the operations further comprise generating a movement trajectory to be used by the robot (RB) to transport the workpiece (W),
the load index value is calculated in the calculating the load index value for the robot (RB) gripping and transporting the workpiece (W) with the robot hand (H) in accordance with the generated movement trajectory,
the stability index value is calculated in the calculating the stability index value for the robot (RB) gripping and transporting the workpiece (W) with the robot hand (H) in accordance with the generated movement trajectory, and
in response to the gripping posture being determined to be inappropriate in the evaluating the gripping posture, at least one of derivation of a new gripping posture in the deriving the gripping posture or generation of a new movement trajectory in the generating the movement trajectory, calculation of a load index value in the calculating the load index value, calculation of a stability index value in the calculating the stability index value, and evaluation in the evaluating the gripping posture are repeated.

**Patentansprüche**

1.  Greifstellungs-Auswertungsvorrichtung (10), aufweisend:

    einen Greifstellungs-Ableiter (101), der dazu eingerichtet ist, eine Greifstellung abzuleiten, in der eine in einem Roboter (RB) enthaltene Roboterhand (H) ein Werkstück (W) greift;
    einen Lastindexrechner (103), der dazu eingerichtet ist, einen Lastindexwert zu berechnen, der eine Last angibt, die auf den Roboter (RB), der das Werkstück (W) mit der Roboterhand (H) greift und transportiert, in der durch den Greifstellungs-Ableiter (101) abgeleiteten Greifstellung aufzubringen ist; und
    einen Greifstellungs-Auswerter (104), der dazu eingerichtet ist, die Greifstellung durch Bestimmen, basierend auf dem durch den Lastindexrechner (103) berechneten Lastindexwert, auszuwerten, ob die Greifstellung geeignet ist,
    wobei als Reaktion darauf, dass der Greifstellungs-Auswerter (104) bestimmt, dass die Greifstellung ungeeignet ist, die Ableitung einer neuen Greifstellung durch den Greifstellungs-Ableiter (101), die Berechnung eines Lastindexwerts durch den Lastindexrechner (103) und die Auswertung durch den Greifstellungs-Auswerter (104) wiederholt werden.

2.  Greifstellungs-Auswertungsvorrichtung (10) nach Anspruch 1, ferner aufweisend:

    einen Stabilitätsindexrechner (102), der dazu eingerichtet ist, einen Stabilitätsindexwert zu berechnen, der eine Greifstabilität für das Werkstück (W) angibt, das durch die Roboterhand (H) in der durch den Greifstellungs-Ableiter (101) abgeleiteten Greifstellung zu greifen und zu transportieren ist,
    wobei der Greifstellungs-Auswerter (104) die Greifstellung durch Bestimmen, basierend auf dem durch den Lastindexrechner (103) berechneten Lastindexwert und dem durch den Stabilitätsindexrechner (102) berechneten Stabilitätsindexwert, auswertet, ob die Greifstellung geeignet ist.

3.  Greifstellungs-Auswertungsvorrichtung (10) nach Anspruch 2, ferner aufweisend:

    einen Bewegungstrajektoriengenerator (112), der dazu eingerichtet ist, eine Bewegungstrajektorie zu erzeugen, die durch den Roboter (RB) zum Transportieren des Werkstücks (W) zu verwenden ist,
    wobei der Lastindexrechner (103) den Lastindexwert für den Roboter (RB) zum Greifen und Transportieren des Werkstücks (W) mit der Roboterhand (H) gemäß der durch den Bewegungstrajektoriengenerator (112) erzeugten Bewegungstrajektorie berechnet,
    der Stabilitätsindexrechner (102) den Stabilitätsindexwert für den Roboter (RB) zum Greifen und Transportieren des Werkstücks (W) mit der Roboterhand (H) gemäß der durch den Bewegungstrajektoriengenerator (112) erzeugten Bewegungstrajektorie berechnet, und
    als Reaktion darauf, dass der Greifstellungs-Auswerter (104) bestimmt, dass die Greifstellung ungeeignet ist, die Ableitung einer neuen Greifstellung durch den Greifstellungs-Ableiter (101) und/oder die Erzeugung einer neuen Bewegungstrajektorie durch den Bewegungstrajektoriengenerator (112), die Berechnung eines Lastindexwerts durch den Lastindexrechner (103), die Berechnung eines Stabilitätsindexwerts durch den Stabilitätsindexrechner (102) und/oder die Auswertung durch den Greifstellungs-Auswerter (104) wiederholt werden.

4.  Greifstellungs-Auswertungsvorrichtung (10) nach einem der Ansprüche 1 bis 3, wobei

    der Lastindexrechner (103) bestimmt, ob der berechnete Lastindexwert geeignet ist, und
    als Reaktion darauf, dass der Lastindexrechner (103) bestimmt, dass der Lastindexwert ungeeignet ist, der Greifstellungs-Ableiter (101) eine neue Greifstellung ableitet, ohne dass der Greifstellungs-Auswerter (104) die Greifstellung auswertet, für die bestimmt wird, dass der Lastindexwert ungeeignet ist.

5.  Greifstellungs-Auswertungsvorrichtung (10) nach Anspruch 2 oder Anspruch 3, wobei

    der Stabilitätsindexrechner (102) bestimmt, ob der berechnete Stabilitätsindexwert geeignet ist, und
    als Reaktion darauf, dass der Stabilitätsindexrechner (102) bestimmt, dass der Stabilitätsindexwert ungeeignet ist, der Greifstellungs-Ableiter (101) eine neue Greifstellung ableitet, ohne dass der Greifstellungs-Auswerter (104) die Greifstellung auswertet, für die bestimmt wird, dass der Stabilitätsindexwert ungeeignet ist.

6.  Greifstellungs-Auswertungsvorrichtung (10) nach einem der Ansprüche 1 bis 5, ferner aufweisend:

einen Greifumsetzungs-Auswerter (111), der dazu eingerichtet ist, die durch den Greifstellungs-Ableiter (101) abgeleitete Greifstellung durch Bestimmen, ob die Greifstellung durch den Roboter (RB), der das Werkstück (W) aufnimmt oder platziert, umsetzbar ist, auszuwerten,

wobei als Reaktion darauf, dass der Greifumsetzungs-Auswerter (111) bestimmt, dass die Greifstellung des Roboters (RB) nicht umsetzbar ist, der Greifstellungs-Ableiter (101) ferner eine neue Greifstellung ableitet, die sich von der durch den Greifumsetzungs-Auswerter (111) ausgewerteten Greifstellung unterscheidet.

7. Greifstellungs-Auswertungsvorrichtung (10) nach einem der Ansprüche 1 bis 6, wobei

der Greifstellungs-Ableiter (101) mehrere Greifstellungen ableitet, und
der Greifstellungs-Auswerter (104) bestimmt, ob die mehreren durch den Greifstellungs-Ableiter (101) abgeleiteten Greifstellungen geeignet sind, und wenn bestimmt wird, dass zwei oder mehr der mehreren Greifstellungen geeignet sind, eine optimale Greifstellung durch Vergleichen der durch den Lastindexrechner (103) berechneten Lastindexwerte für die zwei oder mehr als geeignet bestimmten Greifstellungen bestimmt.

8. Greifstellungs-Auswertungsvorrichtung (10) nach Anspruch 2, Anspruch 3 oder Anspruch 5, wobei

der Greifstellungs-Ableiter (101) mehrere Greifstellungen ableitet, und
der Greifstellungs-Auswerter (104) bestimmt, ob die mehreren durch den Greifstellungs-Ableiter (101) abgeleiteten Greifstellungen geeignet sind, und wenn bestimmt wird, dass zwei oder mehr der mehreren Greifstellungen geeignet sind, eine optimale Greifstellung durch Vergleichen der durch den Lastindexrechner (103) berechneten Lastindexwerte für die zwei oder mehr als geeignet bestimmten Greifstellungen und durch Vergleichen der durch den Stabilitätsindexrechner (102) berechneten Stabilitätsindexwerte für die zwei oder mehr als geeignet bestimmten Greifstellungen bestimmt.

9. Greifstellungs-Auswertungsvorrichtung (10) nach einem der Ansprüche 1 bis 8, wobei
der Greifstellungs-Ableiter (101) eine Greifstellung durch zufälliges Bestimmen einer relativen Positionsbeziehung zwischen der Roboterhand (H) und dem Werkstück (W) ableitet.

10. Greifstellungs-Auswertungsvorrichtung (10) nach einem der Ansprüche 1 bis 8, wobei
der Greifstellungs-Ableiter (101) eine Greifstellung vorzugsweise von einem Punkt ableitet, an dem eine Armendposition des Roboters (RB), der die Roboterhand (H) aufnimmt, und ein Schwerpunkt des Werkstücks (W) übereinstimmen, und ein Armende des Roboters (RB), der die Roboterhand (H) aufnimmt, vom Schwerpunkt des Werkstücks (W) weg bewegt, wenn eine Greifstellung wiederholt abgeleitet wird.

11. Greifstellungs-Auswertungsprogramm zum Bewirken, dass ein Computer Operationen durchführt, aufweisend:

Ableiten einer Greifstellung, in der eine in einem Roboter (RB) enthaltene Roboterhand (H) ein Werkstück (W) greift;
Berechnen eines Lastindexwerts, der eine Last angibt, die auf den Roboter (RB), der das Werkstück (W) mit der Roboterhand (H) greift und transportiert, in der abgeleiteten Greifstellung aufzubringen ist; und
Auswerten der Greifstellung durch Bestimmen, basierend auf dem berechneten Lastindexwert, ob die Greifstellung geeignet ist,
wobei als Reaktion darauf, dass die Greifstellung beim Auswerten der Greifstellung als ungeeignet bestimmt wird, die Ableitung einer neuen Greifstellung beim Ableiten der Greifstellung, die Berechnung eines Lastindexwerts beim Berechnen des Lastindexwerts und die Auswertung beim Auswerten der Greifstellung wiederholt werden.

12. Greifstellungs-Auswertungsprogramm nach Anspruch 11, wobei

die Operationen ferner das Berechnen eines Stabilitätsindexwerts aufweisen, der eine Greifstabilität für das Werkstück (W) angibt, das durch die Roboterhand (H) in der abgeleiteten Greifstellung zu greifen und zu transportieren ist, und
die Greifstellung durch Bestimmen, basierend auf dem berechneten Lastindexwert und dem berechneten Stabilitätsindexwert, ausgewertet wird, ob die Greifstellung beim Auswerten der Greifstellung geeignet ist.

13. Greifstellungs-Auswertungsprogramm nach Anspruch 12, wobei

die Operationen ferner das Erzeugen einer Bewegungstrajektorie aufweisen, die durch den Roboter (RB) zum Transportieren des Werkstücks (W) zu verwenden ist,

der Lastindexwert beim Berechnen des Lastindexwerts für den Roboter (RB), der das Werkstück (W) mit der Roboterhand (H) greift und transportiert, gemäß der erzeugten Bewegungstrajektorie berechnet wird,

der Stabilitätsindexwert beim Berechnen des Stabilitätsindexwerts für den Roboter (RB), der das Werkstück (W) mit der Roboterhand (H) greift und transportiert, gemäß der erzeugten Bewegungstrajektorie berechnet wird, und

als Reaktion darauf, dass die Greifstellung beim Auswerten der Greifstellung als ungeeignet bestimmt wird, die Ableitung einer neuen Greifstellung beim Ableiten der Greifstellung und/oder die Erzeugung einer neuen Bewegungstrajektorie beim Erzeugen der Bewegungstrajektorie, die Berechnung eines Lastindexwerts beim Berechnen des Lastindexwerts, die Berechnung eines Stabilitätsindexwerts beim Berechnen des Stabilitätsindexwerts und/oder die Auswertung beim Auswerten der Greifstellung wiederholt werden.

## Revendications

1. Appareil d'évaluation de posture de préhension (10), comprenant :

un dispositif d'obtention de posture de préhension (101) configuré pour obtenir une posture de préhension dans laquelle une main de robot (H) incluse dans un robot (RB) saisit une pièce à usiner (W) ;

un calculateur d'indice de charge (103) configuré pour calculer une valeur d'indice de charge indiquant une charge à appliquer au robot (RB) saisissant et transportant la pièce à usiner (W) avec la main de robot (H) dans la posture de préhension obtenue par le dispositif d'obtention de posture de préhension (101) ; et

un évaluateur de posture de préhension (104) configuré pour évaluer la posture de préhension en déterminant si la posture de préhension est appropriée sur la base de la valeur d'indice de charge calculée par le calculateur d'indice de charge (103),

dans lequel en réponse à l'évaluateur de posture de préhension (104) déterminant que la posture de préhension est inappropriée, l'obtention d'une nouvelle posture de préhension par le dispositif d'obtention de posture de préhension (101), le calcul d'une valeur d'indice de charge par le calculateur d'indice de charge (103), et l'évaluation par l'évaluateur de posture de préhension (104) sont répétés.

2. Appareil d'évaluation de posture de préhension (10) selon la revendication 1, comprenant en outre :

un calculateur d'indice de stabilité (102) configuré pour calculer une valeur d'indice de stabilité indiquant une stabilité de préhension pour la pièce à usiner (W) à saisir et transporter par la main de robot (H) dans la posture de préhension obtenue par le dispositif d'obtention de posture de préhension (101),

dans lequel l'évaluateur de posture de préhension (104) évalue la posture de préhension en déterminant si la posture de préhension est appropriée sur la base de la valeur d'indice de charge calculée par le calculateur d'indice de charge (103) et de la valeur d'indice de stabilité calculée par le calculateur d'indice de stabilité (102).

3. Appareil d'évaluation de posture de préhension (10) selon la revendication 2, comprenant en outre :

un générateur de trajectoire de mouvement (112) configuré pour générer une trajectoire de mouvement à utiliser par le robot (RB) pour transporter la pièce à usiner (W),

dans lequel le calculateur d'indice de charge (103) calcule la valeur d'indice de charge pour le robot (RB) pour saisir et transporter la pièce à usiner (W) avec la main de robot (H) conformément à la trajectoire de mouvement générée par le générateur de trajectoire de mouvement (112),

le calculateur d'indice de stabilité (102) calcule la valeur d'indice de stabilité pour le robot (RB) pour saisir et transporter la pièce à usiner (W) avec la main de robot (H) conformément à la trajectoire de mouvement générée par le générateur de trajectoire de mouvement (112), et

en réponse à l'évaluateur de posture de préhension (104) déterminant que la posture de préhension est inappropriée, au moins l'un parmi l'obtention d'une nouvelle posture de préhension par le dispositif d'obtention de posture de préhension (101) ou la génération d'une nouvelle trajectoire de mouvement par le générateur de trajectoire de mouvement (112), le calcul d'une valeur d'indice de charge par le calculateur d'indice de charge (103), le calcul d'une valeur d'indice de stabilité par le calculateur d'indice de stabilité (102), et l'évaluation par l'évaluateur de posture de préhension (104) sont répétés.

4. Appareil d'évaluation de posture de préhension (10) selon l'une quelconque des revendications 1 à 3, dans lequel

le calculateur d'indice de charge (103) détermine si la valeur d'indice de charge calculée est appropriée, et en réponse au calculateur d'indice de charge (103) déterminant que la valeur d'indice de charge est inappropriée, le dispositif d'obtention de posture de préhension (101) obtient une nouvelle posture de préhension sans que l'évaluateur de posture de préhension (104) n'évalue la posture de préhension pour laquelle la valeur d'indice de charge est déterminée comme étant inappropriée.

5.  Appareil d'évaluation de posture de préhension (10) selon la revendication 2 ou la revendication 3, dans lequel

le calculateur d'indice de stabilité (102) détermine si la valeur d'indice de stabilité calculée est appropriée, et en réponse au calculateur d'indice de stabilité (102) déterminant que la valeur d'indice de stabilité est inappropriée, le dispositif d'obtention de posture de préhension (101) obtient une nouvelle posture de préhension sans que l'évaluateur de posture de préhension (104) n'évalue la posture de préhension pour laquelle la valeur d'indice de stabilité est déterminée comme étant inappropriée.

6.  Appareil d'évaluation de posture de préhension (10) selon l'une quelconque des revendications 1 à 5, comprenant en outre :

un évaluateur de mise en oeuvre de préhension (111) configuré pour évaluer la posture de préhension obtenue par le dispositif d'obtention de posture de préhension (101) en déterminant si la posture de préhension peut être mise en oeuvre par le robot (RB) prenant ou plaçant la pièce à usiner (W),
dans lequel en réponse à l'évaluateur de mise en oeuvre de préhension (111) déterminant que la posture de préhension du robot (RB) ne peut pas être mise en oeuvre, le dispositif d'obtention de posture de préhension (101) obtient en outre une nouvelle posture de préhension différente de la posture de préhension évaluée par l'évaluateur de mise en oeuvre de préhension (111).

7.  Appareil d'évaluation de posture de préhension (10) selon l'une quelconque des revendications 1 à 6, dans lequel

le dispositif d'obtention de posture de préhension (101) obtient une pluralité de postures de préhension, et l'évaluateur de posture de préhension (104) détermine si la pluralité de postures de préhension obtenues par le dispositif d'obtention de posture de préhension (101) sont appropriées et détermine, lors de la détermination que deux ou plus de la pluralité de postures de préhension sont appropriées, une posture de préhension optimale en comparant les valeurs d'indice de charge calculées par le calculateur d'indice de charge (103) pour les deux ou plus de la pluralité de postures de préhension déterminées comme étant appropriées.

8.  Appareil d'évaluation de posture de préhension (10) selon la revendication 2, la revendication 3 ou la revendication 5, dans lequel

le dispositif d'obtention de posture de préhension (101) obtient une pluralité de postures de préhension, et l'évaluateur de posture de préhension (104) détermine si la pluralité de postures de préhension obtenues par le dispositif d'obtention de posture de préhension (101) sont appropriées et détermine, lors de la détermination que deux ou plus de la pluralité de postures de préhension sont appropriées, une posture de préhension optimale en comparant les valeurs d'indice de charge calculées par le calculateur d'indice de charge (103) pour les deux ou plus de la pluralité de postures de préhension déterminées comme étant appropriées et en comparant les valeurs d'indice de stabilité calculées par le calculateur d'indice de stabilité (102) pour les deux ou plus de la pluralité de postures de préhension déterminées comme étant appropriées.

9.  Appareil d'évaluation de posture de préhension (10) selon l'une quelconque des revendications 1 à 8, dans lequel le dispositif d'obtention de posture de préhension (101) obtient une posture de préhension en déterminant de manière aléatoire une relation de position relative entre la main de robot (H) et la pièce à usiner (W).

10. Appareil d'évaluation de posture de préhension (10) selon l'une quelconque des revendications 1 à 8, dans lequel le dispositif d'obtention de posture de préhension (101) obtient une posture de préhension préférentiellement à partir d'un point auquel une position d'extrémité de bras du robot (RB) recevant la main de robot (H) et un centre de gravité de la pièce à usiner (W) correspondent et éloigne une extrémité de bras du robot (RB) recevant la main de robot (H) du centre de gravité de la pièce à usiner (W) lorsqu'une posture de préhension est obtenue de manière répétée.

11. Programme d'évaluation de posture de préhension pour amener un ordinateur à effectuer des opérations comprenant :

l'obtention d'une posture de préhension dans laquelle une main de robot (H) incluse dans un robot (RB) saisit une pièce à usiner (W) ;
le calcul d'une valeur d'indice de charge indiquant une charge à appliquer au robot (RB) saisissant et transportant la pièce à usiner (W) avec la main de robot (H) dans la posture de préhension obtenue ; et
l'évaluation de la posture de préhension en déterminant si la posture de préhension est appropriée sur la base de la valeur d'indice de charge calculée,
dans lequel en réponse à la posture de préhension étant déterminée comme étant inappropriée dans l'évaluation de la posture de préhension, l'obtention d'une nouvelle posture de préhension dans l'obtention de la posture de préhension, le calcul d'une valeur d'indice de charge dans le calcul de la valeur d'indice de charge, et l'évaluation dans l'évaluation de la posture de préhension sont répétés.

12. Programme d'évaluation de posture de préhension selon la revendication 11, dans lequel

les opérations comprennent en outre le calcul d'une valeur d'indice de stabilité indiquant une stabilité de préhension pour la pièce à usiner (W) à saisir et transporter par la main de robot (H) dans la posture de préhension obtenue, et
la posture de préhension est évaluée en déterminant si la posture de préhension est appropriée dans l'évaluation de la posture de préhension sur la base de la valeur d'indice de charge calculée et de la valeur d'indice de stabilité calculée.

13. Programme d'évaluation de posture de préhension selon la revendication 12, dans lequel

les opérations comprennent en outre la génération d'une trajectoire de mouvement à utiliser par le robot (RB) pour transporter la pièce à usiner (W),
la valeur d'indice de charge est calculée dans le calcul de la valeur d'indice de charge pour le robot (RB) saisissant et transportant la pièce à usiner (W) avec la main de robot (H) conformément à la trajectoire de mouvement générée,
la valeur d'indice de stabilité est calculée dans le calcul de la valeur d'indice de stabilité pour le robot (RB) saisissant et transportant la pièce à usiner (W) avec la main de robot (H) conformément à la trajectoire de mouvement générée, et
en réponse à la posture de préhension étant déterminée comme étant inappropriée dans l'évaluation de la posture de préhension, au moins l'un parmi l'obtention d'une nouvelle posture de préhension dans l'obtention de la posture de préhension ou la génération d'une nouvelle trajectoire de mouvement dans la génération de la trajectoire de mouvement, le calcul d'une valeur d'indice de charge dans le calcul de la valeur d'indice de charge, le calcul d'une valeur d'indice de stabilité dans le calcul de la valeur d'indice de stabilité, et l'évaluation dans l'évaluation de la posture de préhension sont répétés.

FIG. 1

# FIG. 2

## FIG. 3

## FIG. 4

**FIG. 5**

H

W

# FIG. 6

(A)    Distance between center of gravity of workpiece and distal end of robot is the shortest.

(B)    Center of robot hand corresponds to workpiece center of gravity.

(C)    Gripping position corresponds to workpiece center of gravity.

(D)    Random

**FIG. 7**

| Gripping posture | Stability index value | Load index value | Evaluation value |
|---|---|---|---|
| (A) | 0. 6 | 0. 9 | 1. 5 |
| (B) | 0. 2 | 0. 5 | 0. 7 |
| (C) | — | — | — |
| (D) | 0. 0 – 1. 0 | 0. 0 – 1. 0 | 0. 0 – 2. 0 |

**FIG. 8**

```
                    ┌──────────────┐
                    │    Start     │
                    └──────────────┘
                           │
S101  ┌─────────────────────────────────┐
      │      Obtain workpiece model       │
      └─────────────────────────────────┘
                           │
S102  ┌─────────────────────────────────┐
      │      Obtain robot hand model      │
      └─────────────────────────────────┘
                           │
S103  ┌─────────────────────────────────┐
      │      Derive gripping posture      │
      └─────────────────────────────────┘
                           │
S104  ┌─────────────────────────────────┐
      │     Obtain movement trajectory    │
      └─────────────────────────────────┘
                           │
S105  ┌─────────────────────────────────┐
      │    Calculate stability index      │
      │             value                 │
      └─────────────────────────────────┘
                           │
S106        ◇ Stability index value ◇  ──── No ───►
              appropriate?
                           │ Yes
S107  ┌─────────────────────────────────┐
      │      Obtain equation of motion    │
      └─────────────────────────────────┘
                           │
S108  ┌─────────────────────────────────┐
      │      Calculate load index value   │
      └─────────────────────────────────┘
                           │
S109        ◇ Load index value ◇  ──── No ───►
              appropriate?
                           │ Yes
S110  ┌─────────────────────────────────┐
      │      Calculate evaluation value   │
      └─────────────────────────────────┘
                           │
S111        ◇ Evaluation value ◇  ──── No ───►
              appropriate?
                           │ Yes
S112  ┌─────────────────────────────────┐
      │       Determine optimal           │
      │       gripping posture            │
      └─────────────────────────────────┘
                           │
                    ┌──────────────┐
                    │     End      │
                    └──────────────┘
```

**FIG. 9**

```
                    ┌─────────────┐
                    │    Start    │
                    └─────────────┘
                           │
          S101  ┌──────────────────────────┐
                │   Obtain workpiece model  │
                └──────────────────────────┘
                           │
          S102  ┌──────────────────────────┐
                │   Obtain robot hand model │
                └──────────────────────────┘
                           │
          S103  ┌──────────────────────────┐
                │   Derive gripping posture │
                └──────────────────────────┘
                           │
          S104  ┌──────────────────────────┐
                │  Obtain movement trajectory│
                └──────────────────────────┘
                           │
          S105  ┌──────────────────────────┐
                │  Calculate stability index │
                │           value            │
                └──────────────────────────┘
                           │
          S106      ╱ Stability index value ╲    No
                    ╲    appropriate?       ╱ ───────►
                          Yes
          S107  ┌──────────────────────────┐
                │     Obtain equation of     │
                │          motion            │
                └──────────────────────────┘
                           │
          S108  ┌──────────────────────────┐
                │    Calculate load index    │
                │           value            │
                └──────────────────────────┘
                           │
          S109      ╱   Load index value   ╲     No
                    ╲    appropriate?      ╱ ───────►
                          Yes
          S110  ┌──────────────────────────┐
                │    Calculate evaluation    │
                │           value            │
                └──────────────────────────┘
                           │
          S111      ╱  Evaluation value    ╲     No
                    ╲    appropriate?      ╱ ───────►
                          Yes
          S201  ┌──────────────────────────┐
                │   Store gripping posture   │
                │    and evaluation value    │
                └──────────────────────────┘
                           │
          S202      ╱Appropriate evaluation values╲   No
                    ╲  ≥ predetermined number?    ╱ ──────►
                          Yes
          S203  ┌──────────────────────────┐
                │    Determine optimal       │
                │    gripping posture        │
                └──────────────────────────┘
                           │
                    ┌─────────────┐
                    │     End     │
                    └─────────────┘
```

# FIG. 10

Current position and posture of workpiece

Target position and posture of workpiece

Equation of motion

10

Workpiece model

Robot hand model

Gripping posture deriver

112

Movement trajectory generator

Start-goal point posture calculator

110

Gripping implementation evaluator

111

Movement trajectory

101

102

Stability index calculator

Load index calculator

103

H

Robot hand

Robot

RB

Gripping posture output unit

105

# FIG. 11

```
                    ( Start )
                        |
  S101 | Obtain workpiece model |
                        |
  S102 | Obtain robot hand model |
                        |
  S103 | Derive gripping posture |
                        |
  S301 | Calculate start and goal
         point postures |
                        |
  S302 | Evaluate possibility that gripping
         posture is implementable |
                        |
  S303 <  Gripping posture       > No ──────►
          implementable?
                  Yes
                        |
  S304 | Generate movement
         trajectory |
                        |
  S105 | Calculate stability index
         value |
                        |
  S106 <  Stability index value  > No ──────►
          appropriate?
                  Yes
                        |
  S107 | Obtain equation of
         motion |
                        |
  S108 | Calculate load index
         value |
                        |
  S109 <  Load index value       > No ──────►
          appropriate?
                  Yes
                        |
  S110 | Calculate evaluation
         value |
                        |
  S111 <  Evaluation value       > No ──────►
          appropriate?
                  Yes
                        |
  S112 | Determine optimal
         gripping posture |
                        |
                    ( End )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018133730 A
- JP 2016034685 A
- JP 6325174 B